# EUROPEAN PATENT SPECIFICATION

(11) **EP 2 676 998 B1**
(45) Date of publication and mention of the grant of the patent: **26.11.2014**
(21) Application number: 12747403.9
(22) Date of filing: 16.02.2012
(51) Int. Cl.: C08L 27/16, C08L 27/12, C08K 3/08, C08K 5/13, G11B 19/20, C08K 3/22

(54) **FLUORORUBBER COMPOSITION AND PROCESS FOR MANUFACTURING CROSSLINKED FLUORORUBBER**
FLUORKAUTSCHUKZUSAMMENSETZUNG UND HERSTELLUNGSVERFAHREN FÜR EINEN VERNETZTEN FLUORKAUTSCHUK
COMPOSITION DE CAOUTCHOUC FLUORÉ ET PROCÉDÉ DE FABRICATION D'UN CAOUTCHOUC FLUORÉ RÉTICULÉ

(30) Priority: 17.02.2011 JP 2011032260
(43) Date of publication of application: 25.12.2013
(73) Proprietor: NOK Corporation, Minato-ku Tokyo 105-8585 (JP)
(72) Inventor: KASHIHARA Takayuki, Fujisawa-shi Kanagawa 251-0042 (JP); HAYAKAWA Rikio, Fujisawa-shi Kanagawa 251-0042 (JP)
(74) Representative: Zinnecker, Armin
(86) International application number: PCT/JP2012/053666
(87) International publication number: WO 2012/111751

(56) References cited:
- WO-A1-01/85848
- WO-A1-02/102892
- JP-A- 2010 053 186
- JP-A- 2011 122 112

## Description

### TECHNICAL FIELD

The present invention relates to a fluororubber composition and a method for producing a crosslinked fluororubber product, and more particularly to a fluororubber composition and a method for producing a crosslinked fluororubber product having a higher specific gravity and better physical properties.

### BACKGROUND ART

With increased volumes of hard disks in recent years, it is necessary to improve precision of hard disk drives. Thus, balance-adjusting weights (hereinafter referred to as "balancers") are frequently used around disks of hard disk drives.

Since materials having higher specific gravities and good cleanliness are required as crosslinked rubber products to be used for balancers, crosslinked fluororubber products have been conventionally used.

Typical crosslinked fluororubber products, however, have specific gravities of about 1.8 to 2.1, so that several balancers are sometimes required to be used to adjust balance of a disk, thereby problematically increasing a cost for purchasing balancers.

Further, when disks are out of balance, it is sometimes impossible to fully balance them using balancers with the specific gravities conventionally used for balancers.

In view of the above description, crosslinked rubber products having higher specific gravities while maintaining cleanliness are demanded for balancers.

As a technique to increase a specific gravity of a crosslinked fluororubber product, it is known to blend barium sulfate thereinto, as a filler having a higher specific gravity and having less influence on physical properties of the crosslinked fluororubber product.

Blending of barium sulfate in large quantities to achieve increased specific gravities of 2.2 or more, however, results in occurrence of influence on physical properties of the balancers, and particularly in considerably decreased breaking elongations of crosslinked rubber products, such that molding of products is made difficult depending on the shapes of the products. In fact, this problem causes a limited blending amount and consequently a limited specific gravity.

Meanwhile, a technique in Patent Document 1 successfully reduces a decrease in breaking elongations even if barium sulfate is blended in an amount of 50 to 180 pts. wt., using a fluororubber composed of peroxide-crosslinkable terfluoropolymers, and obtains a fluororubber composition having a high specific gravity and better physical properties in the aspect of breaking elongation.

Unfortunately, the technique in Patent Document 1 provides no advantageous effects in cases where a binary fluoropolymer is used. Since the production of a terfluoropolymer needs a higher cost than a binary fluoropolymer, a fluororubber composition is strongly demanded so as to be manufacturable using a binary fluoropolymer and have a high specific gravity and good cleanliness.

While the fluororubber composition described in Patent Document 1 poses no problem with amount to balance with the volumes of currently-used hard disk drives, it was found that sulfate ions (SO₄²⁻) derived from barium sulfate are detected.

An expected increase in the volumes of hard disks will require a fluororubber composition used as a balancer to have much better cleanliness.

### PRIOR ART DOCUMENT

### PATENT DOCUMENT

Patent Document 1: JP-A-2010-053186

### DISCLOSURE OF THE INVENTION

### PROBLEMS TO BE SOLVED BY THE INVENTION

An object of the present invention is to provide a fluororubber composition and a method for producing a crosslinked fluororubber product which is clean from no detection of sulfate ions, has a high specific gravity and good physical properties in the aspect of elongation at breakage.

Other objects of the invention will become apparent from the following description.

### MEANS FOR SOLVING THE PROBLEM

The above-described objects can be achieved by the following inventions.

1. A fluororubber composition comprising:
   a fluororubber polymer;
   at least one kind selected from the group consisting of a bismuth metal and a bismuth compound (other than those containing a sulfate ion, a sulfide ion and a halogen ion); and
   a crosslinking agent, wherein
   at least one kind selected from the group consisting of said bismuth metal or said bismuth compound is included in an amount of more than 50 to 200 pts. wt. based on 100 pts. wt. of said fluoropolymer.
2. A method for producing a crosslinked fluororubber product comprising:
   crosslinking the fluororubber composition according to claim 1; and subsequently heat-treating the resulting crosslinked fluororubber composition at a temperature ranging from 200 to 300 ° C for 0.1 to 48 hours to obtain a crosslinked product having a specific gravity of 2.2 or more and a breaking elongation (%) of 200% or more as measured according to JIS K6251.
3. A balance-adjusting weight comprising the crosslinked fluororubber product obtained by the method according to claim 2.

### ADVANTAGES OF THE INVENTION

The present invention can provide a fluororubber composition and a method for producing a crosslinked fluororubber product which is clean from no detection of sulfate ions, and has a high specific gravity and good physical properties in the aspect of elongation at breakage.

### BEST MODE FOR CARRYING OUT THE INVENTION

Embodiments of the present invention are described below.

### [Fluororubber Composition]

The fluororubber composition of the present invention comprises a fluororubber polymer; at least one kind selected from the group consisting of a bismuth metal and a bismuth compound (hereinafter referred to as bismuth); and a crosslinking agent.

### <Fluororubber Polymer>

A polymer or a copolymer of one or more kinds of fluorine-containing olefins can be used as the fluororubber polymer.

Specific examples of fluorine-containing olefins include vinylidene fluoride, hexafluoropropylene, pentafluoropropylene, trifluoroethylene, trifluorochloroethylene, tetrafluoroethylene, vinyl fluoride, perfluoroacrylic esters, perfluoroalkyl acrylates, perfluoromethyl vinyl ether, perfluoropropyl vinyl ether. One or more kinds of these fluorine-containing olefins can be used.

The fluororubber polymer used in this invention is preferably a binary fluororubber polymer.

Binary fluororubber polymers include a vinylidene fluoride-hexafluoropropylenebinary copolymer (VDF-HFP). These fluororubber polymers can be obtained by solution polymerization, suspension polymerization, or emulsion polymerization according to conventionally known methods, and are commercially available (e.g. Viton A manufactured by DuPont).

### <Bismuth>

Bismuths used in this invention are at least one kind selected from the group consisting of a bismuth metal and a bismuth compound.

The bismuth is preferably a bismuth trioxide (III) (hereinafter referred to as bismuth oxide), but is not limited thereto, and other bismuths that meet requirements of specific gravity and cleanliness can preferably be used.

Particularly, in order to meet the requirement of cleanliness, bismuth compounds containing a sulfate ion, a sulfide ion or a halogen ion are not used in this invention.

In addition, one or more kinds of bismuths can be used.

A bismuth used in this invention has a higher specific gravity than barium sulfate. Therefore, the production of a crosslinked product having the same specific gravity can advantageously reduce the blending amount of bismuth compared to barium sulfate, resulting in no deterioration in physical properties, particularly in breaking elongation attributed to addition of blending agents in large quantities to readily achieve crosslinking and molding.

The blending amount of bismuth ranges from more than 50 to 200 pts. wt. based on 100 pts. wt. of a fluoropolymer, preferably 60 to 170 pts. wt. and more preferably 65 to 165 pts. wt.

### <Crosslinking Agent>

A polyol-based crosslinking agent can be used as the crosslinking agent.

The polyol-based crosslinking agent is preferably bisphenol, and examples of usable bisphenols include polyhydroxy aromatic compounds such as 2,2-bis(4-hydroxyphenyl)propane [bisphenol A], 2,2-bis(4-hydroxyphenyl)perfluoropropane [bisphenol AF], bis(4-hydroxyphenyl)sulfone [bisphenol S], bisphenolA-bis(diphenyl phosphate), 4,4'-dihydroxydiphenyl, 4,4'-dihydroxydiphenylmethane, 2,2-bis(4-hydroxyphenyl)butane, and preferably bisphenol A and bisphenol AF. These may also be in the form of an alkali metal salt or an alkaline earth metal salt.

In addition, a commercially available master batch containing a raw rubber and a crosslinking agent may also be used as the polyol-based crosslinking agent. One or more kinds of these crosslinking agents may also be used.

The content of the polyol-based crosslinking agent preferably ranges 1 to 10 pts. wt. based on 100 pts. wt. of a fluororubber polymer, more preferably 2 to 5 pts. wt.

### <Crosslinking Accelerator>

A crosslinking accelerator can be used together with the polyol-based crosslinking agent in this invention, and a quaternary phosphonium salt represented by general formula of (R₁R₂R₃R₄P)⁺X⁻ can be used as the crosslinking accelerator. In the formula, R₁ to R₄ represent an alkyl group, an alkoxy group, an aryl group, an alkyl aryl group, an aralkyl group or a polyoxyalkylene group having 1 to 25 carbon atoms, or 2 to 3 groups thereof can form a heterocyclic structure together with P. X⁻ is an anion such as Cl⁻, Br⁻, I⁻, HSO₄⁻, H₂PO₄⁻, RCOO⁻, ROSO₂⁻, RSO⁻, ROPO₂H⁻ and CO₃²⁻. R represents the same meaning as the above-described R₁ to R₄.

Specific examples of the quaternary phosphonium salt include tetraphenylphosphonium chloride, triphenylbenzyl phosphonium chloride, triphenylbenzyl phosphonium bromide, triphenylmethoxy methyl phosphonium chloride, triphenylmethylcarbonyl methyl phosphonium chloride, triphenylethoxycarbonyl methyl phosphonium chloride, trioctylbenzyl phosphonium chloride, trioctylmethyl phosphonium bromide, trioctyl ethyl phosphonium acetate, trioctylethyl phosphonium dimethylphosphate, tetraoctyl phosphonium chloride and cetyl dimethylbenzyl phosphonium chloride.

To blend a crosslinking accelerator, a commercially available master batch containing a raw rubber and a crosslinking accelerator may also be used. Additionally, one or more kinds of these crosslinking accelerators may also be used.

### <Other Blending Components>

In this invention, components generally used in the rubber industry may be added in addition to the above components, as required, as other blending components within a range such that the effects of the bismuth, crosslinking agent and crosslinking accelerator used in this invention are not impaired. Examples of other blending components include reinforcing agents such as carbon black and carbon fiber; fillers such as hydrotalcite (Mg₆Al₂(OH)₁₆CO₃), calcium carbonate, magnesium carbonate, aluminum hydroxide, magnesium hydroxide, aluminum silicate, magnesium silicate, calcium silicate, potassium titanate, titanium oxide, aluminum borate, glass fiber, aramid fiber, and the like; processing aids such as waxes, metallic soaps, and the like; acid acceptors such as calcium hydroxide, magnesium oxide, zinc oxide, and the like; crosslinking agents; antioxidants; thermoplastic resins; etc.

### <Preparation>

Examples of methods for preparing the fluororubber composition according to this invention include a method in which predetermined amounts of the above-described components are kneaded using a closed kneader such as an intermix, a kneader, or a Banbury mixer, or using a general kneader for rubber such as an open roll mill, a method in which each component is dissolved in a solvent or the like and dispersed with a stirrer or the like, and so forth.

### [Method for Producing Crosslinked Fluororubber Product]

### <Primary Crosslinking>

The fluororubber composition obtained as described above can be crosslinked and molded by heating (primary crosslinking) typically at a temperature of 140 to 230 ° C for about 1 to 120 minutes, using an injection molding machine, a compression molding machine, a vulcanizing press, an oven, or the like.

Although the primary crosslinking is a process of crosslinking the fluororubber composition to such a degree that its shape can be maintained to form (pre-form) a certain shape, and primary crosslinking can also be performed in an air oven or the like, the composition is preferably molded with a mold in the case of a complicated shape.

In this invention, when a fluororubber composition is kneaded and then the resulting processed product is compression molded, the composition after kneading may typically be compression molded by (a) cooling back to room temperature once and heating again, or (b) heating continuously after kneading. In the compression step using a compression molding machine, the method (a) above is typically employed.

### <Heat Treatment>

In this invention, a heat treatment (secondary crosslinking) is performed after the primary crosslinking. As the heat treatment after primary crosslinking, the fluororubber composition (primary crosslinked product) of this invention is heated to a temperature in a range of 200 to 300 ° C, preferably in a range of 220 to 260 ° C, and more preferably in a range of 230 to 260 ° C. The heat-treatment time is from 0.1 to 48 hours, preferably 1 to 48 hours, and more preferably 10 to 48 hours.

### < Physical Properties of Crosslinked Fluororubber Product>

The crosslinked fluororubber product obtained in this way has a specific gravity of 2.2 or more, and a breaking elongation of 200% or more as measured according to JIS K6251.

Moreover, since no SO₄²⁻ ions are detected from the crosslinked fluororubber product as a fluororubber, the product is more favorable in cleanliness.

Accordingly, the crosslinked product can be utilized for a fluororubber product required to have a higher specific gravity and to exhibit cleanliness, particularly as a balance-adjusting weight (balancer) of a disk within a hard disk drive.

### EXAMPLES

Examples of the present invention are hereinafter described; however, the invention is not limited by the Examples.

### Example 1

Binary fluororubber polymer ("Viton A-500" manufactured by DuPont Dow Elastomers; Moony viscosity ML₁₊₁₀ (121 ° C) 45): 100 pts. wt.
Bismuth (bismuth oxide manufactured by HEK (currently operated as SLM Solutions GmbH)): 65 pts. wt.
Magnesium oxide: 3 pts. wt.
Calcium hydroxide ("CALDIC #2000" manufactured by Ohmi Chemical Industry Co., Ltd.): 3 pts. wt.
Crosslinking aid: Bisphenol AF (a master batch of 50wt% "Curative VC#30" and 50wt% fluororubber [Viton E-45], manufactured by DuPont Dow Elastomers): 4.5 pts. wt. (thrown into a roll)
Crosslinking accelerator: Triphenylbenzyl phosphonium chloride (a master batch of 33wt% "Curative VC#20" crosslinking accelerator and 67wt% fluororubber [Viton E-45], manufactured by DuPont Dow Elastomers): 1.5 pts. wt. (thrown into a roll)

Each of the above-listed components (except for the crosslinking component) was thrown into a kneader and kneaded for 20 minutes, after which the crosslinking components were thrown into an open roll mill, thereby preparing a composition.

The resulting component was pressurized and primary-crosslinked at 170 ° C for 20 minutes to mold a crosslinked product, and secondary crosslinking was further performed in an oven at 230 ° C for 24 hours, thereby producing a crosslinked fluororubber product.

### <Evaluation>

In a test sample of the obtained crosslinked fluororubber product, normal physical properties and an amount of extracted ions were measured by the following method. Table 1 shows the results.

### 1. Normal physical properties

Hardness: measured by Type A durometer according to JIS K6253.
Specific gravity: measured according to JIS Z8807.
Breaking strength (MPa): measured according to JIS K6251.
Breaking elongation (%): measured according to JIS K6251.

The breaking elongation, if it is 200% or less, is not preferable due to problematic molding properties.

### 2. Amount of extracted ions (SO₄²⁻ ions)

A test piece of the crosslinked fluororubber product, 13mm in diameter and 2mm in thickness, was stirred and washed in a 20ml ultrapure water for 10 minutes (1^{st} washing). After the 1^{st} washing, the test piece was removed, then stirred and washed in another 20ml ultrapure water for 10 minutes (2^{nd} washing). Furthermore, the test piece was washed (3^{rd} washing), and SO₄²⁻ ions from the 3^{rd} wash solution was measured by ion chromatography. The results were evaluated as an amount of extracted SO₄²⁻ ions per 1cm² of the test piece.

The amount of extracted SO₄²⁻ ions is preferably 20ng/cm² or less.

### Example 2

Evaluation was performed by producing a crosslinked product in the same manner as Example 1, except that the blending amount of bismuth was changed to 165 pts. wt. Table 1 shows the results.

### Comparative Example 1

Evaluation was performed by producing a crosslinked product in the same manner as Example 1, except that the blending amount of barium sulfate, instead of the bismuth, was changed to 115 pts. wt. Table 1 shows the results.

### Comparative Example 2

Evaluation was performed by producing a crosslinked product in the same manner as Comparative Example 1, except that the blending amount of barium sulfate was changed to 535 pts. wt. Table 1 shows the results.

### Comparative Example 3

Terfluororubber polymer ("Viton GLT600S" manufactured by DuPont Dow Elastomers; Mooney viscosity ML_{1+ 10} (121 ° C) 65): 100 pts. wt.
Barium sulfate ("Bariace B-54" manufactured by Sakai Chemical Industry Co., Ltd.): 120 pts. wt.
Zinc oxide (manufactured by Seido Chemical Industry Co., Ltd.): 3 pts. wt.
Crosslinking agent: 2,5-dimethylhexane-2,5-dihydroperoxido ("PERHEXA 25B-40" manufactured by NOF Corporation): 2 pts. wt. (thrown into a roll)
Crosslinking accelerator: Triallyl isocyanurate ("TAIC M-60" manufactured by Nippon Kasei Chemical Co., Ltd.): 3 pts. wt. (thrown into a roll)

Evaluation was performed by obtaining a crosslinked fluororubber product in the same manner as Example 1, using each of the above-described blending components. Table 1 shows the results.

**[Table 1]**

| (pts.wt.) | | | | | | |
|---|---|---|---|---|---|---|
| | | Example 1 | Example 2 | Comperative Example 1 | Comparative Example 2 | Comparative Example 3 |
| Blended Material | Binary fluororubber polymer (Viton A-500) | 100 | 100 | 100 | 100 | |
| | Terfluororubber polymer (Viton GLT600S) | | | | | 100 |
| | Bismuth oxide | 65 | 165 | | | |
| | Barium sulfate | | | 115 | 535 | 120 |
| | Magnesium oxide | 3 | 3 | 3 | 3 | |
| | Calcium hydroxide | 3 | 3 | 3 | 3 | |
| | Zinc oxide | | | | | 3 |
| | Bisphenol AF Master Batch (Curative VC#30) | 45 | 45 | 4.5 | 4.5 | |
| | Triphenylbenzyl Phosphonium Chloride Master Batch (Curatko VC#20) | 15 | 15 | 15 | 15 | |
| | 2,5-dimethylhexane-2,5-dihydroperoxide (PERHEXA 25B-40) | | | | | 2 |
| | Triallyl isocyanurate (TAlC M-60) | | | | | 3 |
| Molding Condition | Primary crosslinking (°C/min) | 170/20 | 170/20 | 170/20 | 170/20 | 170/20 |
| | Secondary crosslinking (°C/hr) | 230/24 | 230/24 | 230/24 | 230/24 | 230/24 |
| Normal Physical Property | Hardness JIS K6253 | 67 | 80 | 67 | 99 | 70 |
| | Specific gravity JIS Z8807 | 2.60 | 350 | 2.60 | 350 | 2.60 |
| | Breaking strength (MPa) JIS K6251 | 7.25 | 6.80 | 7.10 | 6.85 | 950 |
| | Breaking elongation (%) JIS K6251 | 265 | 220 | 190 | 40 | 280 |
| Amount of Extracted SO₄²⁻ Ions (ng/cm²) | | 4 | 3 | 347 | 730 | 365 |

From the results of Examples 1 and 2, a crosslinked product having a high specific gravity is obtainable, and the breaking elongation was over a targeted value required for molding of 200%. The amount of extracted SO₄²⁻ ions was 20ng/cm² or less.

In Comparative Example 1, barium sulfate was added to obtain a crosslinked fluororubber product having the same specific gravity as Example 1, and the breaking elongation was under a targeted value required for molding of 200%. The amount of extracted SO₄²⁻ ions was 347ng/cm², which significantly exceeded a standard value.

In Comparative Example 2, barium sulfate was added to obtain a crosslinked fluororubber product having the same specific gravity as Example 2, and the breaking elongation was far under a targeted value required for molding of 200%. The amount of extracted SO₄²⁻ ions was 740ng/cm², which significantly exceeded a standard value.

In Comparative Example 3, 120 pts. wt. barium sulfate was blended using a terfluoropolymer to obtain a crosslinked fluororubber product having a specific gravity of 2.6, and the breaking elongation was over a targeted value required for molding of 200%. The amount of extracted SO₄²⁻ ions was 365ng/cm², which significantly exceeded a standard value.

## Claims

1. A fluororubber composition comprising:
a fluororubber polymer;
at least one kind selected from the group consisting of a bismuth metal and a bismuth compound (other than those containing a sulfate ion, a sulfide ion and a halogen ion); and
a crosslinking agent, wherein
at least one kind selected from the group consisting of said bismuth metal or said bismuth compound is included in an amount of more than 50 to 200 pts. wt. based on 100 pts. wt. of said fluoropolymer.

2. A method for producing a crosslinked fluororubber product comprising:
crosslinking the fluororubber composition according to claim 1; and subsequently heat-treating the resulting crosslinked fluororubber composition at a temperature ranging from 200 to 300 ° C for 0.1 to 48 hours to obtain a crosslinked product having a specific gravity of 2.2 or more and a breaking elongation (%) of 200% or more as measured according to JIS K6251.

3. A balance-adjusting weight comprising the crosslinked fluororubber product obtained by the method according to claim 2.

## Patentansprüche

1. Fluorkautschukzusammensetzung, umfassend:
ein Fluorkautschukpolymer;
mindestens eine Art, die aus der aus einem Wismutmetall und einer Wismutverbindung (ausgenommen jene, die ein Sulfation, ein Sulfidion und ein Halogenion enthalten) bestehenden Gruppe ausgewählt ist; und
ein Vernetzungsmittel, wobei
mindestens eine Art, die aus der aus dem Wismutmetall oder der Wismutverbindung bestehenden Gruppe ausgewählt ist, in einer Menge von mehr als 50 bis 200 Gew.-% bezogen auf 100 Gew.-% des Fluorpolymers enthalten ist.

2. Verfahren zur Herstellung eines vernetzten Fluorkautschukprodukts, mit den folgenden Schritten:
Vernetzen der Fluorkautschukzusammensetzung nach Anspruch 1; und anschließend Wärmebehandeln der resultierenden vernetzten Fluorkautschukzusammensetzung bei einer Temperatur im Bereich von 200 bis 300 °C für 0,1 bis 48 Stunden, um ein vernetztes Produkt mit einem spezifischen Gewicht von 2,2 oder mehr und einer Bruchdehnung (%) von 200% oder mehr, gemessen nach JIS K6251, zu erhalten.

3. Ausgleichsgewicht, welches das nach dem Verfahren gemäß Anspruch 2 erhaltene vernetzte Fluorkautschukprodukt umfasst.

## Revendications

1. Une composition de caoutchouc fluoré comprenant :
un polymère de caoutchouc fluoré ;
au moins un type choisi dans le groupe consistant en un métal bismuth et un composé bismuth (autre que ceux contenant un ion sulfate, un ion sulfure et un ion halogène) ; et
un agent de réticulation, où
au moins un type choisi dans le groupe consistant dudit métal bismuth ou dudit composé bismuth est inclus dans une quantité supérieure à 50 à 200 pts en poids basée sur 100 pts en poids dudit polymère fluoré.

2. Un procédé pour produire un produit de caoutchouc fluoré réticulé comprenant :
réticuler la composition de caoutchouc fluoré selon la revendication 1 ; et subséquemment traiter par chauffage la composition de caoutchouc fluoré réticulée résultante à une température s'étendant de 200 à 300°C pendant 0,1 à 48 heures pour obtenir un produit réticulé ayant une gravité spécifique de 2,2 ou plus et un allongement de rupture (%) de 200% ou plus comme mesuré selon JIS K6251.

3. Masse de réglage d' équilibrage comprenant le produit de caoutchouc fluoré réticulé obtenu par le procédé selon la revendication 2.
